# EUROPÄISCHE PATENTSCHRIFT

(11) **EP 0 554 268 B1**
(45) Veröffentlichungstag und Bekanntmachung des Hinweises auf die Patenterteilung: **02.01.1997**
(21) Anmeldenummer: 91916901.1
(22) Anmeldetag: 02.10.1991
(51) Int. Cl.: H04J 3/06, H04J 3/12

(54) **VERFAHREN UND ANORDNUNG ZUR ÜBERTRAGUNG VON SYNCHRONISIERSIGNALEN IN EINEM NETZWERK DER SYNCHRON-DIGITAL-HIERARCHIE**
PROCESS AND SYSTEM FOR TRANSMITTING SYNCHRONISATION SIGNALS IN A NETWORK IN THE SYNCHRONOUS-DIGITAL HIERARCHY
PROCEDE ET DISPOSITIF DE TRANSFERT DE SIGNAUX DE SYNCHRONISATION DANS UN RESEAU A HIERARCHIE SYNCHRONE NUMERIQUE

(30) Priorität: 22.10.1990 DE 4033557
(43) Veröffentlichungstag der Anmeldung: 11.08.1993
(73) Patentinhaber: SIEMENS AKTIENGESELLSCHAFT, 80333 München (DE)
(72) Erfinder: POSPISCHIL, Reginhard, D-8032 Gräfelfing/Lochham (DE)
(86) Internationale Anmeldenummer: DE9100777
(87) Internationale Veröffentlichungsnummer: WO9207433

(56) Entgegenhaltungen:
- EP-A- 0 344 534
- ICC 1990 Bd. 2, 15. April 1990, ATLANTA, US Seiten 381 - 390; H. KLINGER ET AL: 'A 2.4 GBIT/S SYNCHRONOUS OPTICAL FIBER TRANSMISSION SYSTEM'
- SECOND IEE NATIONAL CONFERENCE ON TELECOMMUNICATIONS 2. April 1989, YORK, GB Seiten 297 - 302; T.C. WRIGHT: 'THE SYNCHRONOUS DIGITAL HIERARCHY STANDARD'
- NTZ NACHRICHTECHNISCHE ZEITSCHRIFT. Bd. 41, Nr. 10, Oktober 1988, BERLIN DE Seiten 570 - 574; W. EHRLICH ET AL: 'DIE NEUE SYNCHRONE DIGITALE HIERARCHIE'

## Beschreibung

Die Erfindung bezieht sich auf ein Verfahren zur Übertragung von Synchronisiersignalen in STM-N-Signalen, die in einem Netzwerk der Synchron-Digital-Hierarchie von einem ersten Netzknoten mit einem Frequenznormal zu allen anderen Netzknoten übertragen werden und die als Synchronisiersignalträger bekannt sind. Außerdem bezieht sich die Erfindung auf eine Anordnung zur Durchführung des Verfahrens.

Synchronisiersignale werden in analogen Netzwerken mittels Pilotton und in der europäischen Plesiochron-Digital-Hierarchie in ausgewählten 2,048-Mbit/s-Signalen übertragen und dienen örtlich der Synchronisierung auf die Frequenz eines Frequenznormals.

Die Synchron-Digital-Hierarchie ist in der Zeitschrift "telcom report", 11 (1988) Heft 5, S. 160 - 163 beschrieben. In dieser Hierarchie wird mit Bitraten von N x 155,52 Mbit/s und mit Pulsrahmen STM-N für N = 1, 2, 3,...16 gearbeitet. Es können in diesen Signale übertragen werden, die aus der europäischen oder nordamerikanischen Plesiochron-Digital-Hierarchie stammen.

Die Multiplexstruktur und die Pulsrahmen dieser STM-N-Signale sind im "CCITT Blue Book", Vol. III, Fasc. III.4, General Aspects of Digital Transmission Systems; Terminal Equipments, Genf 1989, in den Seiten 122, 123, 124, 128 und 143 beschrieben.

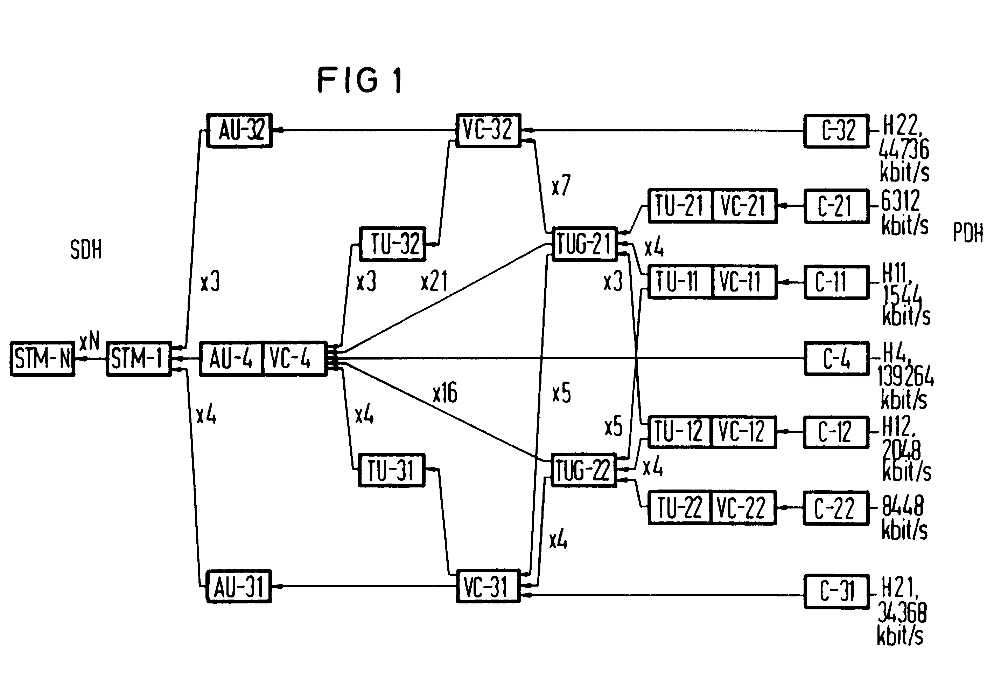

Figur 1 zeigt die Multiplexstruktur entsprechend Fig. 1-1/G.709 auf Seite 122 dieses Blaubuchs. Es bedeutet AU Verwaltungseinheit (Administrative Unit), C Container, H Digitalsignal, PDH Plesiochron-Digital-Hierarchie, SDH Synchron-Digital-Hierarchie, STM Synchrones Transportmodul, TU Untersystemeinheit (Tributary Unit), TUG Untersystemeinheitengruppe (Tributary Unit Group) und VC Virtualcontainer. Die angehängten Ziffern oder Ziffernpaare n bezeichnen die Lage in der Multiplexstruktur gemäß Figur 1.

Die zu übertragenden Digitalsignale werden am Eingangsknoten zum synchronen Netzwerk mittels positivem Stopfen in Container C-n eingefügt und am Ausgangsknoten aus Containern C-n wieder entnommen. Jeder Container wird durch Hinzufügen eines Pfadrahmenkopfes (Path Overhead) POH zu einem Virtualcontainer VC-n ergänzt, die periodisch übertragen werden. Die zeitliche Lage des ersten Bytes im Pulsrahmen eines Virtualcontainers wird durch einen Zeiger (Pointer) PTR angegeben, dessen zeitliche Lage im Pulsrahmen festgelegt ist. Als solcher dient in der Regel der Virtualcontainer einer höheren Hierarchiestufe. Ein Virtualcontainer VC-n bildet mit dem ihm zugeordneten Zeiger eine Untersystemeinheit TU-n. Mehrere dieser gleichen Aufbaus können wieder zu einer Untersystemeinheitengruppe TUG-n zusammengefaßt werden. Beim Demultiplexen verlaufen die Verfahrensschritte umgekehrt.

Die obere Hälfte der Multiplexstruktur dient der Übertragung von Signalen aus der plesiochronen nordamerikanischen 1,5-Mbit/s-Hierarchie und die untere Hälfte der Übertragung von Signalen der plesiochronen europäischen 2-Mbit/s-Hierarchie.

Ein Multiplexen oder Demultiplexen ist in der Multiplexstruktur über verschiedene Wege möglich. So können beispielsweise vierundsechzig H12-Signale über die Untersystemeinheitengruppe TUG-22 entweder direkt oder auf dem Umweg über den Virtualcontainer VC-31 und die Bildung einer Untersystemeinheit TU-31 in den Virtualcontainer VC-4 eingefügt werden.

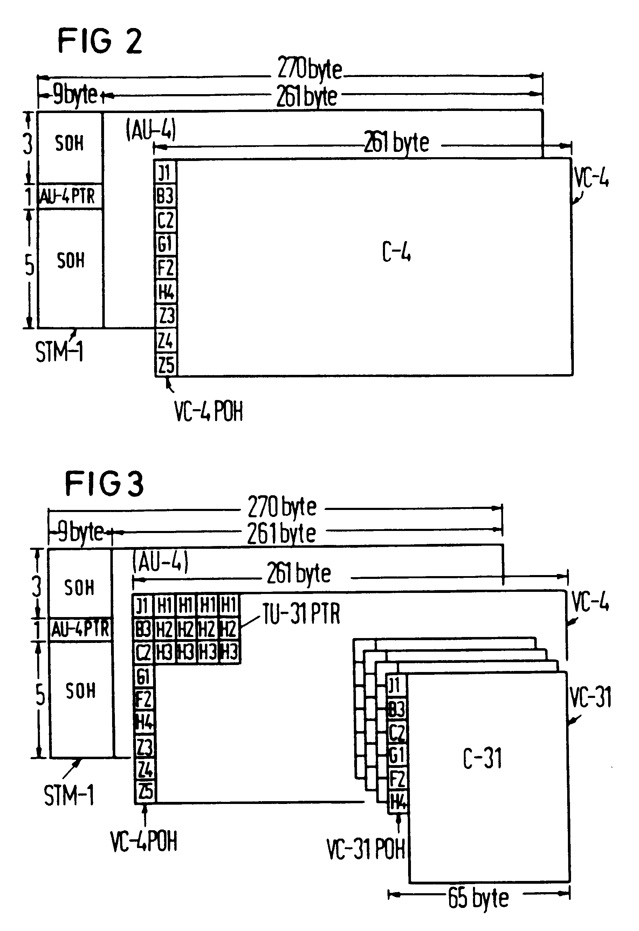

Figur 2 zeigt ein synchrones Transportmodul STM-1 gemäß Figur 2-1/G.709 auf Seite 123 des genannten Blaubuchs. Der Pulsrahmen enthält einen Kopfabschnitt (Section Overhead) SOH, eine Verwaltungseinheit AU-4 und einen Verwaltungseinheitszeiger (Administrative Unit Pointer) AU-4 PTR. Der Pulsrahmen besteht aus 2430 byte oder 19 440 bit. Aus Gründen der Platzersparnis ist dieser in neun Abschnitte unterteilt, die in Form von neun Reihen untereinander angeordnet sind. Der Pulsrahmen umfaßt somit 270 Spalten; davon nehmen der Kopfabschnitt SOH und der Verwaltungseinheitszeiger AU-4 PTR die ersten neun Spalten ein.

In die Verwaltungseinheit AU-4 wird ein Virtualcontainer VC-4 eingefügt, dessen Anfang innerhalb der Verwaltungseinheit AU-4 der Verwaltungseinheitszeiger AU-4 PTR angibt. Er enthält die gleiche Reihen- und Spaltenzahl wie die Verwaltungseinheit AU-4. Eine erste Spalte dient der Aufnahme eines Pfadrahmenkopfes (Path Overhead) POH mit von CCITT empfohlenen Bytes J1, B3, C2, G1, F2, H4, Z3, Z4 und Z5, wobei J1 (Path Trace) den anschließenden Container C-4 für Nutzsignale auf seinem Weg von der Quelle bis zur Senke markiert.

Figur 3 zeigt ein weiteres Transportmodul STM-1 entsprechend Figur 2-2/G.709 auf Seite 124 des genannten Blaubuches. Der Container C-4 enthält im Gegensatz zur Figur 2 links oben je drei byte für vier Untersystemeinheitenzeiger (Tributary Unit Pointer) TU-31 PTR. Sein restlicher Raum wird mit vier Virtualcontainern VC-31 mit Pfadrahmenköpfen VC-31 POH und Containern C-31 gefüllt. Diese vermögen 34 368-kbit/s-Signale zu übertragen.

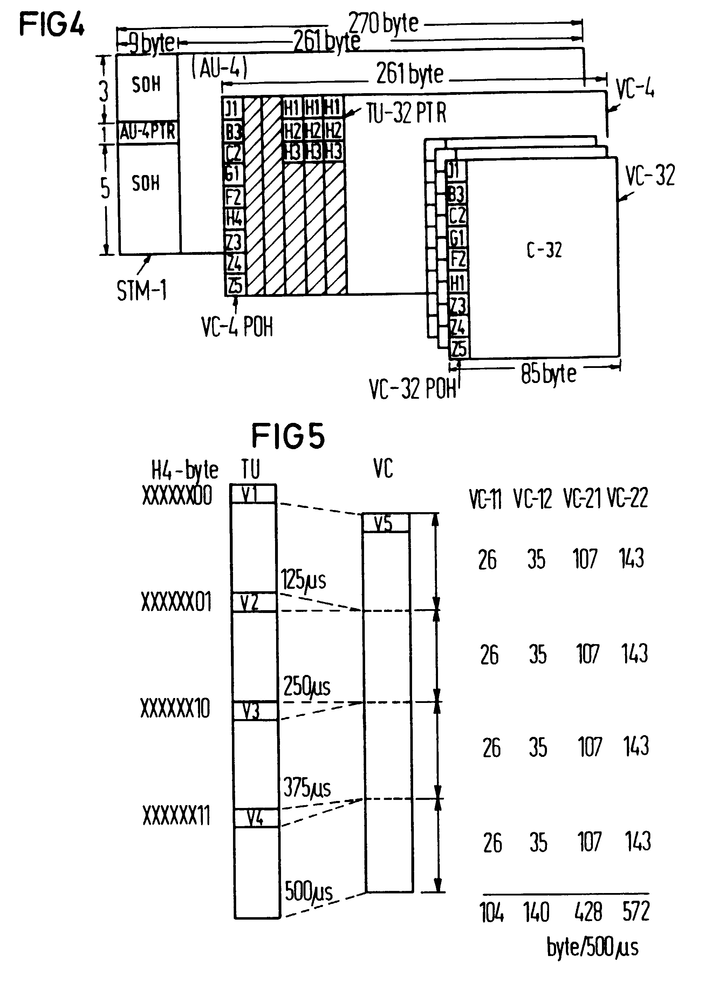

Figur 4 zeigt einen STM-1-Pulsrahmen und einen Virtualcontainer VC-4 gemäß Figur 2-3/G.709 auf Seite 124 des genannten Blaubuches, wie in den Figuren 2 und 3. Der Container C-4 enthält hier je drei byte für drei Untersystemeinheitenzeiger TU-32 PTR und schraffiert dargestellt Bytes für eine feste Stopfung sowie drei Virtualcontainer VC-32 mit Pfadrahmenköpfen VC-32 POH und Containern C-32. Diese sind für eine Aufnahme von 44 736-kbit/s-Signalen geeignet.

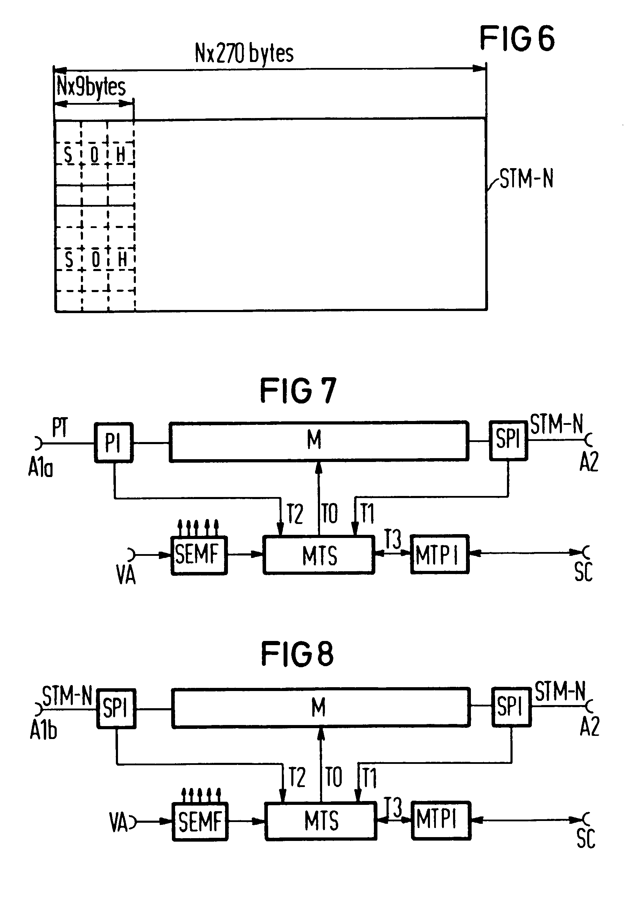

Figur 5 zeigt Untersystemeinheiten TU-12 bzw. TU-22 gemäß Figur 3-13/G.709 auf Seite 143 des genannten Blaubuches. Diese sind in Überrahmen zu je 500 µs eingeteilt. Ein solcher enthält vier Rahmen mit einer Periodendauer von je 125 µs. Die Bytes V1 bis V4 sind nach CCITT festgelegt. Die Bytes V1 befinden sich immer in der ersten Zeile des Überrahmens. Der Pfadrahmenkopf VC-31 POH bzw. VC-32 POH legt den Überrahmen durch ein Byte H4 fest. Die erste Zeile wird durch ein Byte J1 bezeichnet. Es ist dargestellt, wie in diese Untersystemeinheit TU-12 bzw. TU 22 Virtualcontainer VC-12, VC-22, VC-11 oder VC-21 eingefügt werden. Letztere können 2048-, 8448-, 1544 oder 6312-kbit/s-Signale aufnehmen.

Figur 6 zeigt, wie N STM-1-Signale zu einem STM-N-Signal nach Figur 2-8/G.709 auf Seite 128 des genannten Blaubuchs zusammengesetzt werden. Zuerst folgen die N Kopfabschnitte SOH aufeinander, dann werden die restlichen Signale verschachtelt.

Die CCITT-Empfehlungen G.781, G.782 und G.783 in der Druckschrift COM XV-R 41-E, August 1990, Study Group XV-Report R 41 legen die Struktur der Empfehlungen, die Typen und allgemeinen Eigenschaften sowie die Funktionen der Multiplexeinrichtung für die Synchron-Digital-Hierarchie fest.

Auf Seite 7 ist ein "Multiplex Timing Physical Interface" MTPI und eine "Multiplex Timing Source" MTS definiert. Die Funktion MTPI stellt die Schnittstelle zwischen einem externen Synchronisiersignal und der Funktion MTS dar. Letztere versorgt Netzwerkelemente wie Multiplexer, Kreuzschaltungen (Cross Connect) oder Leitungsausrüstungen mit den erforderlichen Synchrontakten.

Auf den Seiten 25-27 sind die allgemeinen Anforderungen an die Synchronisation festgelegt. Die externen Synchronisations-Schnittstellen sind nach Absatz 4.1.2.3 eine externe Synchronisations-Schnittstelle für 2048 kHz, eine Untereinheitenschnittstelle und eine STM-N-Schnittstelle. Letztere hat immer die Priorität. Für den Ausfall aller Takte der genannten Schnittstellen enthält die Funktion MTS einen eigenen Oszillator.

Die Zeitfunktionen sind auf den Seiten 70 - 73 beschrieben. Ein STM-N-Synchronisiersignal T1 wird in einer physikalischen SDH-Schnittstelle SPI abgeleitet. Ein Synchronisiersignal T2 wird in einer physikalischen Schnittstelle PI aus dem ankommenden Untereinheitensignal gewonnen und das 2048-kHz-Signal T3 wird von der MTPI-Schnittstelle abgegeben.

Das Ausgangssignal eines Netzwerkelements weist immer einen netzknoteneinheitlichen MTS-Takt auf, d.h. der Ausgangstakt ist im allgemeinen mit dem Eingangstakt nicht synchron. Taktabweichungen werden durch Positiv-Null-Negativ-Stopfverfahren zusammen mit einer Zeigerumwertung ausgeglichen.

Die Synchronisation von Netzknoten mit Kreuzschaltungen ist noch nicht festgelegt. In einem Haltemodus (hold over mode), bei dem beim Ausfall aller Takte deren letzte Taktfrequenz gehalten wird, ist diese zu allen Eingangstakten des Netzknotens plesiochron.

In einem SDH-Netz können nicht alle Netzelemente über eine direkte STM-N-Leitung mit einem beispielsweise nationalen Frequenznormal verbunden werden. Es ist daher naheliegend, für die Synchronisation eine Baumstruktur festzulegen. Bei einer solchen werden alle Netzknoten, die auf einen im Haltemodus arbeitenden Eingangsknoten folgen, auf letzteren synchronisiert. Den gleichen Effekt bewirkt jedes Netzwerkelement im Haltemodus, über welches das Signale mit dem Synchrontakt als Signalisiersignal geführt wird.

Figur 7 zeigt ein gegenüber Figur 2.1/G.783 vereinfachtes Blockdiagramm, bei dem lediglich die Taktfunktionen herausgestellt sind. Dieses enthält eine PI-Schnittstelle (Physical Interface), einen Multiplexer- und/oder Kreuzschaltung (Cross Connect) M, eine SPI-Schnittstelle (SDH Physical Interface), einen MTS-Erzeuger (Multiplexer Timing Source), eine MTPI-Schnittstelle (Multiplexer Timing Physical Interface) und eine SEMF-Steuereinheit (Synchronous Equipment Management Function).

Am Anschluß Ala wird ein plesiochrones Untersystemsignal PT (Plesiochronous Tributary Signal) entweder zugeführt oder entnommen und am Anschluß A2 wird ein STM-N-Signal entweder entnommen oder zugeführt. In der SPI-Schnittstelle wird ein Takt T1 aus einem am Anschluß A2 ankommenden Signal, in der PI-Schnittstelle wird ein Takt T2 aus einem am Anschluß Ala ankommenden Signal und in der MTPI-Schnittstelle wird ein Takt T3 aus einem am Synchronisiersignalanschluß SC ankommenden Signal abgeleitet. Der MTS-Erzeuger erzeugt verschiedene Takte TO, die die Multiplexer- und/oder Kreuzschaltung M benötigt. Die SEMF-Steuereinrichtung steuert alle Elemente der Anordnung und empfängt Befehle über ihren Eingang VA.

Der Takt T1 hat Priorität für die Frequenz festlegung des Synchrontakts und der aus diesem abgeleiteten Takte T0. Fällt der Takt T1 aus, dann übernimmt je nach Festlegung entweder der Takt T2 oder der Takt T3 seine Aufgabe. Fallen alle diese Takte aus, dann übernimmt der Oszillator im MTS-Erzeuger die Aufgabe der Takterzeugung. Der Haltemodus bewirkt, daß der Oszillator auf derselben Frequenz weiterschwingt, die der letzte anliegende Takt hatte. Die Stabilität des Frequenznormals kann der Oszillator aber nicht aufbringen.

Figur 8 zeigt eine Anordnung, die sich gegenüber der Anordnung nach Figur 7 nur dadurch unterscheidet, daß an die Stelle der PI-Schnittstelle eine SPI-Schnittstelle mit einem Anschluß Alb tritt. Die Anordnung befindet sich demnach mitten im SDH-Netzwerk und weist keine Eingänge für plesiochrone Signale auf. Der Takt T1 wird an der SPI-Schnittstelle entnommen, an der das Synchronisiersignal von der Zentrale ankommt.

Wenn das von der Zentrale zum Anschluß A1b oder A2 kommende STM-N-Signal über einen Netzknoten gelaufen ist, der wegen des Ausfalls aller Takte T1 bis T3 im Haltemodus arbeitet, dann hat das ankommende STM-N-Signal - wie schon gesagt - die Frequenz des in diesem Netzknoten laufenden Oszillators und nicht die Synchronisierfrequenz der Zentrale.

Alle bisher beschriebenen Verfahrenschritte sind dem Fachmann wohlvertraut.

Bei Einfügung eines AIS-Signals oder bei Unterbrechung der Strecke, erfährt dies der nachfolgende Netzknoten. Einen Ausfall des Synchronisiersignals durch einen Haltemodus erkennt er nicht. Zwar kann ihm die Zentrale diese Störung melden, jedoch nützt dies bei einer Kreuzschaltung nichts, weil nur ein Eingang mit einer Einrichtung zur Ableitung des Synchronisiersignals ausgerüstet ist und eine Zufuhr des Synchronisiersignals über einen anderen Eingang deshalb nichts bewirkt. Alle Eingänge mit einer SPI-Schnittstelle zu versehen und alle wahlweise mit dem MTS-Erzeuger zu verbinden, wäre ein zu großer Aufwand.

Der Erfindung liegt die Aufgabe zugrunde, ein Verfahren anzugeben, bei dem ein vom ersten Netzknoten ankommendes Synchronisiersignal über jeden Eingang eines Multiplexers oder einer Kreuzschaltung in einem anderen Netzknoten empfangen und ausgewertet werden kann. Außerdem ist eine geeignete Anordnung anzugeben.

Ausgehend von einem Verfahren der einleitend geschilderten Art wird diese Aufgabe erfindungsgemäß dadurch gelöst, daß als Synchronisiersignal für alle anderen Netzknoten der wiedergewonnene und mit der Frequenz des Frequenznormals übereinstimmende Takt eines im STM-N-Signal enthaltenen Virtualcontainers verwendet wird. Hierzu sind alle in den Figuren 1 bis 5 gezeigten Virtualcontainer geeignet.

Die Erfindung beruht auf der Erkenntnis, daß ein Virtualcontainer seinen Quellentakt bis zur Senke beibehält. Ist dieser nicht zum Übertragungstakt eines STM-N-Signals synchron, in dem der Virtualcontainer übertragen wird, erfolgt mit Positiv-Null-Negativ-Stopfen eine Taktanpassung an den STM-N-Rahmen. Bei jedem Stopfvorgang verschiebt sich in diesem dabei der Anfang. Bei einem Virtualcontainer VC-4 in einem STM-1-Rahmen handelt es sich um ± 3 byte. Der Anfang wird durch einen Zeiger festgelegt, dessen Wert sich bei jedem Stopfvorgang - auch in Netzknoten im Haltemodus - ändert. Da die Änderungen aufsummiert werden, kann unter Berücksichtigung der Zeigeraktivitäten der Quellentakt des Virtualcontainers zurückgewonnen werden. Voraussetzung ist lediglich, daß der Virtualcontainer in einem Netzknoten gebildet wurde, in dem der Takt des Frequenznormals zur Verfügung steht.

Soll das Synchronisiersignal beim Durchqueren eines Netzknotens auf Anweisung von einer Zentrale an einen anderen Virtualcontainer abgegeben werden, dann darf dies nur einer sein, für den dieser Netzknoten Quelle ist.

Es ist gleichgültig, ob der Netzknoten von der Zentrale darüber informiert wird, welcher Virtualcontainer als Synchronisiersignalträger verwendet wird, oder ob in die vom ersten Netzknoten ausgesendeten Virtualcontainern auf Anweisung der Zentrale ein Codewort eingegeben wird, das auf das in dem Virtualcontainer enthaltene Synchronisiersignal hinweist, so daß dies im Netzknoten selbst erkannt werden kann.

Das Codewort kann beispielsweise in das Jl-Byte oder in ein zur freien Verwendung zur Verfügung stehendes Z-Byte eines Pfadrahmenkopfes POH eingefügt werden.

Für eine Kreuzschaltung ist es vorteilhaft, wenn ein der Schaltebene entsprechenden Virtualcontainer VC-n Synchronisiersignalträger ist. Das Synchronisiersignal ist ein Takt, bei dem auf 261 x 8 Impulse eine Lücke von 9 x 8 Impulsen folgt und der durch Pufferung zurückgewonnen wird.

Bei einer Kreuzschaltung kann der das Synchronisiersignal enthaltende Virtualcontainer in einfacher Weise über eine Verzweigerfunktion sowohl auf ihren Zielausgang als auch auf eine Synchronisiersignal-Rückgewinnungsschaltung durchgeschaltet werden.

Eine zur Durchführung des Verfahrens geeignete erfindungsgemäße Anordnung zeichnet sich dadurch aus, daß eine VC-4-Taktrückgewinnungsanordnung vorgesehen ist, die drei digitale Teiler enthält, die eingangsseitig mit dem Ausgang der SPI-Schnittstelle für den Übertragungstakt und ausgangsseitig mit je einem Eingang eines steuerbaren Schalters verbunden sind und deren Teilungsverhältnisse 1:809, 1:810 und 1:811 betragen, die eine Schaltersteuerung enthält, die unter Berücksichtigung des Rahmentaktes bei Auftreten von positiven oder negativen Verwaltungseinheitszeiger-Justierungsereignissen den Schalter umschaltet, die einen Speicher enthält, dessen Eingang mit dem Ausgang des Schalters verbunden ist, und die einen Vervielfacher enthält, dessen Eingang mit dem Ausgang des Speichers verbunden ist, der an seinem Ausgang einen Synchronübertragungstakt für den MTS-Erzeuger liefert und einen Vervielfachungsfaktor 810 aufweist.

Anhand eines Ausführungsbeispiels wird die Erfindung nachstehend näher erläutert. Im folgenden sind auch die bereits erläuterten Figuren zusammengestellt:
- Figur 1: zeigt eine bekannte Multiplexstruktur der Synchron-Digital-Hierarchie SDH,
- Figur 2: zeigt einen bekannten STM-1-Pulsrahmen mit einem Virtualcontainer VC-4,
- Figur 3: zeigt einen bekannten STM-1-Pulsrahmen mit einem Virtualcontainer VC-4 und vier Virtualcontainern VC-31,
- Figur 4: zeigt einen bekannten STM-1-Pulsrahmen mit einem Virtualcontainer VC-4 und drei Virtualcontainern VC-32,
- Figur 5: zeigt bekannte Virtualcontainer VC-11, VC-12, VC-21 und VC-22,
- Figur 6: zeigt einen bekannten STM-N-Pulsrahmen,
- Figur 7: zeigt ein Blockschaltbild eines bekannten Multiplexers in einem auch plesiochrone Signale verarbeitende Netzknoten,
- Figur 8: zeigt ein Blockschaltbild eines bekannten Multiplexers in einem nur synchrone Signale verarbeitende Netzknoten,
- Figur 9: zeigt Teile des Blockschaltbildes nach Figur 7 detailliert,
- Figur 10: zeigt das Blockschaltbild einer bekannten Abschnittsanpassung in Figur 9,
- Figur 11: zeigt eine erfindungsgemäße VC-4-Taktrückgewinnungsanordnung,
- Figur 12: zeigt ein erfindungsgemäß arbeitendes SDH-Netzwerk und
- Figur 13: zeigt eine erfindungsgemäße Synchronisiersignal-Rückgewinnungsanordnung.

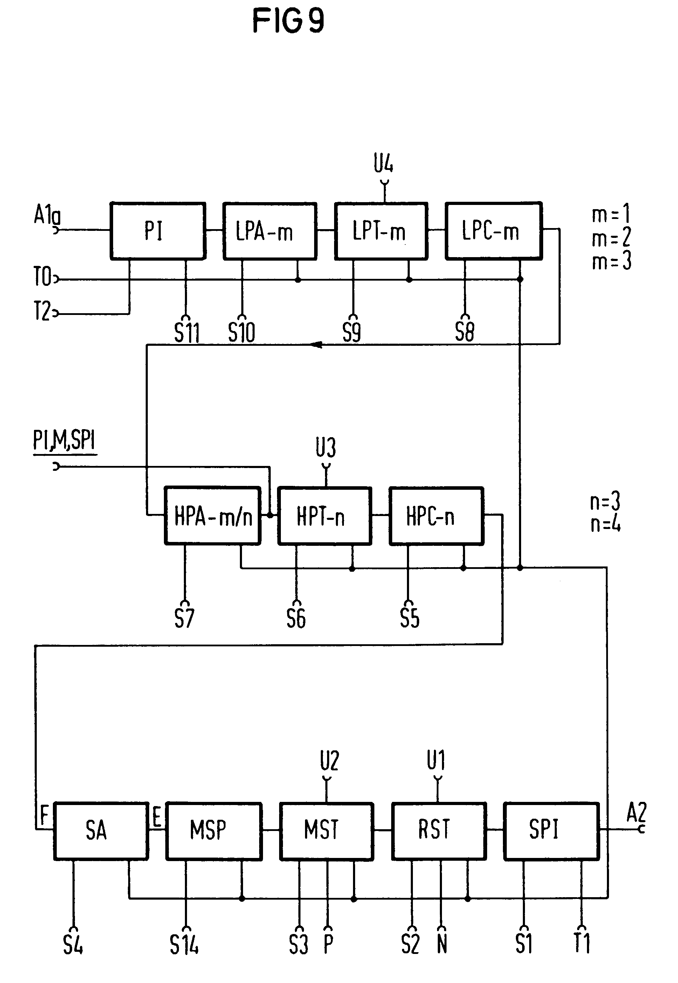

Figur 9 zeigt die Multiplexer- und/oder Kreuzschaltung M zusammen mit der PI- und der SPI-Schnittstelle gemäß Figur 2.1 der CCITT-Empfehlung G.783 detailliert. Die Multiplexer- und/ oder Kreuzschaltung M enthält eine Pfadanpassung niederer Ordnung (Lower order Path Adaptation) LPA-m, einen Pfadabschluß niederer Ordnung (Lower order Path Termination) LPT-m, eine Pfadverbindung niederer Ordnung (Lower order Path Connection) LPC-m, eine Pfadanpassung höherer Ordnung (Higher order Path Adaptation) HPA-m/n, einen Pfadabschluß höherer Ordnung (Higher order Path Termination) HPT-n, eine Pfadverbindung höherer Ordnung (Higher order Path Connection) HPC-n, eine Abschnittsanpassung (Section Adaptation) SA, einen Multiplexabschnittsschutz (Multiplex Section Protection) MSP, eine Multiplexabschnittsabschluß (Multiplex Section Termination) MST und einen Regeneratorabschnittabschluß (Regenerator Section Termination) RST. Für die Virtualcontainer VC-m und VC-n kann m die Werte 1, 2 oder 3 und n kann die Werte 3 oder 4 annehmen. Die Baugruppen sind über Referenzpunkte S1 bis S11 und S14 mit der SEMF-Steuereinheit verbindbar. Die Referenzpunkte U1 bis U4 stellen Verbindungen zu einer Rahmenkopf-Zugangsanordnung (Overhead Access) dar.

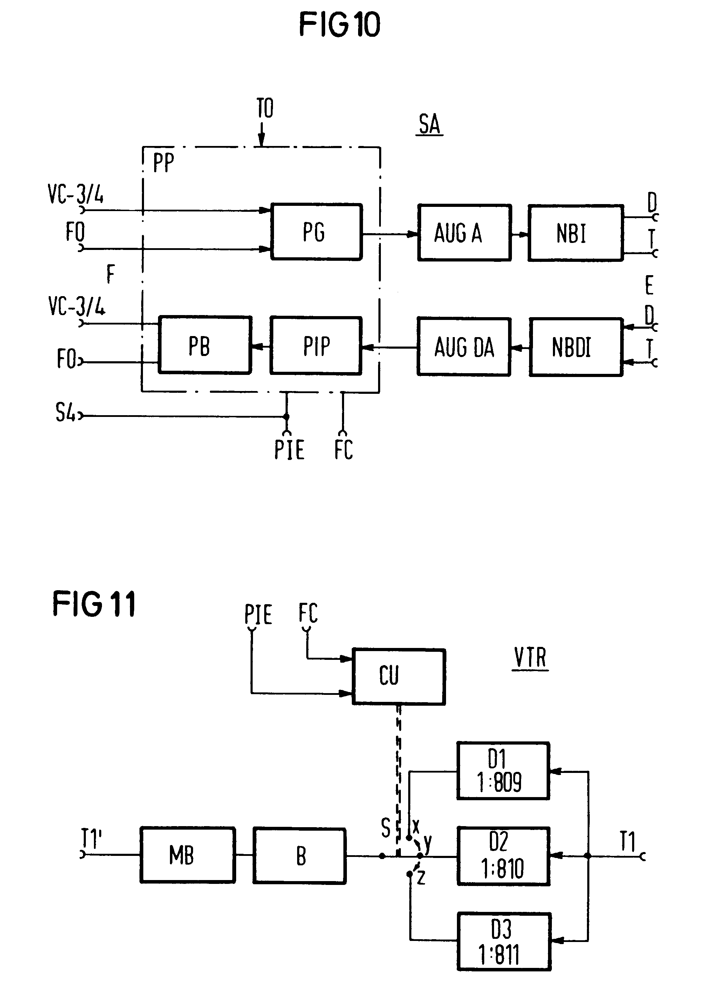

Figur 10 zeigt die Abschnittsanpassung SA detaillierter, die der Figur 2.7 der CCITT-Empfehlung G.783 entspricht. Die Anordnung enthält für die eine Übertragungsrichtung einen Zeigergenerator (Pointer Generator) PG, einen Zusammensteller für Verwaltungseinheitengruppen (Administrative Unit Group Assembler) AUG A und einen N-Byte-Einfüger (N Byte Interleaver) NBI. In der Gegenrichtung ist ein N-Byte-Abzweiger (N Byte Disinterleaver) NBDI, ein Verwaltungseinheitengruppen-Zerleger (Administrative Unit Group Disassembler) AUG DA, ein Zeigerauswerter (Pointer Interpreter) PIP und ein Zeigerspeicher (Pointer Buffer) PB enthalten. Der Zeigererzeuger PG, der Zeigerauswerter PIP und der Zeigerspeicher PB bilden einen Zeigerprozessor PP.

Die Abschnittsanpassung SA synchronisiert sich auf dem STH-1-Rahmen auf, bildet den Rahmentakt (FC), wertet den Verwaltungseinheitszeiger AU-3 oder AU-4 aus, zeigt die Phase des Pfadrahmenkopfes VC-3 POH oder VC-4 POH relativ zum Abschnittskopf SOH eines synchronen Transportmoduls STM-N an und bildet oder zerlegt dessen vollständigen Rahmen. Am Referenzpunkt S4 erscheinen Verwaltungseinheitszeiger-Justierungsereignisse (Administrative Unit Pointer Justification Events) PJE, am Zeigerspeicher PB eine Rahmenversetzung (Frame Offset) FO und am Zeigerauswerter PIP ein Rahmentakt FC. Die Verwaltungseinheitszeiger-Justierereignisse PJE und die Rahmenversetzung FO sagen dasselbe aus. Man muß eines von beiden verwenden.

Bei Übereinstimmung zwischen dem Übertragungstakt T1 und dem VC-4-Takt enthält jeder Rahmen 2349 VC-4-Bytes und 81 SOH-Bytes, zusammen also 2430 byte. Ist der Übertragungstakt T1 schneller, so werden in einem Rahmen 3 byte weniger Nutzinformation übertragen (Positivstopfen). Ist der Übertragungstakt zu langsam, so werden in einem Rahmen 3 byte weniger SOH; Bytes übertragen (Negativstopfen).

Figur 11 zeigt die erfindungsgemäße VC-4-Taktrückgewinnungsanordnung VTR. Sie enthält einen ersten digitalen Teiler D1 mit einem Teilungsverhältnis 1:809, einen zweiten digitalen Teiler D2 mit einem Teilungsverhältnis 1:810, einen dritten digitalen Teiler D3 mit einem Teilungsverhältnis 1:811, einen steuerbaren Schalter S, eine Schaltersteuerung CU, einen Speicher B und einen Vervielfacher MP.

Der VC-3-Takt ist 1/3 des VC-4-Taktes. Will man jedoch nicht wirklich den VC-3-Takt, sondern den korrigierten STM-1-Takt haben, dann kann man die gleiche Schaltung verwenden, wobei man nur den VC-3-Zeiger auswertet.

Als Speicher B kann ein Bandpaß für 155 520 kHz : 810 = 192 kHz dienen; der Vervielfacher MP kann aus diesem 192-kHz-Takt den gewünschten Multiplextakt T1' mit beispielsweise einer Frequenz von 155 520 kHz erzeugen.

Der STM-1-Rahmen enthält 270 x 9 = 2430 byte. 155 520 kHz : 2430 byte = 64 kHz/byte = 192 kHz/3byte.

Liegen an der Schaltersteuerung CU keine Verwaltungseinheitszeiger-Justierungsereignisse PJE an, dann steuert die Schaltersteuerung CU den steuerbaren Schalter S in die Stellung y. Bei einem positiven Verwaltungseinheitszeiger-Justierungsereignis PJE - wenn die Frequenz des Übertragungstakts T1 zu hoch ist - schaltet die Schaltersteuerung CU den steuerbaren Schalter S für eine Rahmenperiode in dessen Stellung z. Nach einem negativen Verwaltungseinheitszeiger-Justierungsereignis PJE schaltet die Schaltersteuerung CU den steuerbaren Schalter S dagegen für eine Rahmenperiode in dessen Stellung x. Dazu erhält sie den Rahmentakt FC. Der Multiplextakt T1' des Vervielfachers MP wird dem MTS-Erzeuger in den Figuren 7 und 8 anstelle des Übertragungstaktes T1 zugeführt.

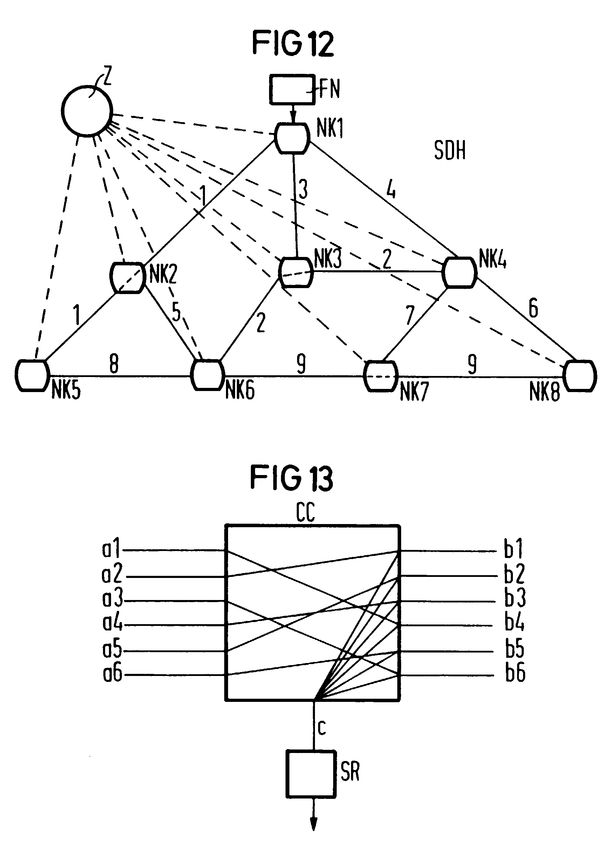

Figur 12 zeigt ein SDH-Netzwerk mit Netzknoten NK1 bis NK8, einem Frequenznormal FN und mit einer Zentrale Z. In dem Netzwerk werden STM-N-Signale mit Virtualcontainern VC-o (o = 1, 2, 3, ...9) über diese Netzknoten NK1 bis NK8 verbindenden Strecken jeweils im Gegenverkehr übertragen. Die Ziffern o sind für dieses Beispiel gewählt und haben nichts mit der Bezifferung der in den vorhergehenden Figuren dargestellten Virtualcontainer zu tun. Mit den Ziffern o werden in der Figur 12 auch die Strecken bezeichnet, über die sie übertragen werden. Die Zentrale Z ist mit allen Netzknoten NK1-NK8 über virtuelle Wege verbunden, die auch die Strecken 1-9 sein können.

Im ersten Netzknoten NK1 wird die MTS-Funktion an die Normalfrequenz angepaßt. In allen weiteren Netzknoten NK2 bis NK8 werden die ankommenden STM-N-Signale mittels Zeiger- und Stopfverfahren an den Takt der MTS-Funktion angepaßt. Aus dem abgehenden STM-N-Signal läßt sich unter Zuhilfenahme von Synchronisationsschaltungen mit Pufferspeichern unter Berücksichtigung der Zeigerbewegungen der Quellentakt der einzelnen Virtualcontainer VC-o zurückgewinnen.

Die Virtualcontainer VC-1 werden vom Netzknoten NK1 über den Netzknoten NK2 zum Netzknoten NK5 und umgekehrt geführt. Die Virtualcontainer VC-2 werden vom Netzknoten NK4 über den Netzknoten NK3 zum Netzknoten NK6 und umgekehrt geleitet. Die Virtualcontainer VC-9 werden vom Netzknoten NK6 über den Netzknoten NK7 zum Netzknoten NK8 und umgekehrt transportiert. Die Virtualcontainer VC-3, VC-4, VC-6, VC-7 und VC-8 werden jeweils nur zum benachbarten Netzknoten geleitet.

Da das Frequenznormal FN an den Netz knoten NK1 angeschlossen ist, können die Netzknoten NK2 und NK5 über den Takt des Virtualcontainers VC-1, der Netzknoten NK3 über den Takt des Virtualcontainers VC-3 und der Netzknoten NK4 über den Takt des Virtualcontainers VC-4 synchronisiert werden. Der Netzknoten NK4 kann jedoch nicht über die Takte der Virtualcontainer VC-3 und VC-2 synchronisiert werden, da der Takt des Virtualcontainers VC-2 in Richtung zum Netz knoten NK4 im Netzknoten NK6 in Richtung zum Netzknoten NK4 festgelegt wird. Der Netzknoten NK6 kann nur über die Takte der Virtualcontainer VC-1 und VC-5, VC-1 und VC-8, VC-4 und VC-2 oder VC-4 und VC-6 und VC-9 synchronisiert werden.

Möglich ist weiter beispielsweise ein Übergang von VC-1 nach VC-5 im Netzknoten NK2, von VC-1 nach VC-8 im Netzknoten NK5, von VC-4 nach VC-6 oder VC-7 im Netzknoten NK4, von VC-6 nach VC-9 im Netzknoten NK8 oder von VC-5 bzw. VC-8 nach VC-9 im Netzknoten NK7. Unzulässig ist dagegen ein Übergang von VC-3 nach VC-2 im Netzknoten NK3 oder von VC-7 nach VC-9 im Netzknoten NK7 oder von VC-5 nach VC-1 im Netzknoten NK2.

Das Synchronisiersignal erreicht jeden Netzknoten N2 bis N8, auch wenn in der Zuführungsstrecke ein Netzknoten im Haltemodus verharrt.

Figur 13 zeigt ein Blockschaltbild mit einer Kreuzschaltung CC und mit einer mit dieser über einen Ausgang c verbundenen Synchronisiersignal-Rückgewinnungsanordnung SR. An den Eingängen a1 - a6 eintreffende Virtualcontainer werden auf Anweisung der Zentrale Z jeweils mit einem Ausgang b1 - b6 verbunden. Jeder Ausgang b1 - b6 kann auf Anweisung der Zentrale auch mit der Synchronisiersignal-Rückgewinnungsanordnung SR verbunden werden und dieser das Synchronisiersignal liefern.

## Patentansprüche

1. Verfahren zur Übertragung von Synchronisiersignalen in STM-N-Signalen, die in einem Netzwerk der Synchron-Digital-Hierarchie (SDH) von einem ersten Netzknoten (NK1) mit einem Frequenznormal (FN) zu allen anderen Netzknoten (NK2-NK8) übertragen werden und die als Synchronisiersignalträger bekannt sind,
**dadurch gekennzeichnet,**
daß als Synchronisiersignal für alle anderen Netzknoten (NK2-NK8) der wiedergewonnene und mit der Frequenz des Frequenznormals (FN) übereinstimmende Takt eines im jeweils ankommenden STM-N-Signal enthaltenen Virtualcontainers (VC-o) verwendet wird.

2. Verfahren nach Anspruch 1,
**dadurch gekennzeichnet,**
daß das Synchronisiersignal bei der Durchquerung eines Netzknotens (NK2-NK8) auf Anweisung von einer Zentrale (Z) nur an solche andere Virtualcontainer (VC-o) weitergegeben wird, die in diesem Netzknoten (NK2-NK8) ihre Quelle haben.

3. Verfahren nach Anspruch 1 oder 2,
**dadurch gekennzeichnet,**
daß die Netz knoten (NK1-NK8) von der Zentrale (Z) über die jeweils als Synchronisiersignalträger verwendeten Virtualcontainer (VC-o) informiert werden (o= 1, 2, 3, 4).

4. Verfahren nach Anspruch 1 oder 2,
**dadurch gekennzeichnet**,
daß in die von dem ersten Netzknoten (NK1) ausgesendeten Virtualcontainer (VC-o) auf Anweisung der Zentrale (Z) ein Codewort eingegeben wird, das auf das in dem Virtualcontainer (VC-o) enthaltene Synchronisiersignal hinweist.

5. Verfahren nach Anspruch 4,
**dadurch gekennzeichnet,**
daß das Codewort in den Pfadrahmenkopf (POH) eingegeben wird.

6. Verfahren nach Anspruch 5,
**dadurch gekennzeichnet,**
daß für die Übertragung des Codeworts das Jl-Byte des Pfadrahmenkopfes (POH) verwendet wird.

7. Verfahren nach Anspruch 5,
**dadurch gekennzeichnet,**
daß für die Übertragung des Codeworts ein Z-Byte des Pfadrahmenkopfes (POH) verwendet wird.

8. Verfahren nach einem der Ansprüche 1 bis 7 zur Übertragung über Netzknoten (NK1-NK8) mit Kreuzschaltungen (Cross-Connect)
**dadurch gekennzeichnet,**
daß ein der Schaltebene entsprechender Virtualcontainer VC-n als Synchronisiersignalträger verwendet werden.

9. Verfahren nach Anspruch 8,
**dadurch gekennzeichnet,**
daß die Virtualcontainer (VC-o) über eine Verzweigerfunktion sowohl auf ihren Zielausgang als auch auf eine Synchronisiersignal-Rückgewinnungsschaltung durchgeschaltet werden.

10. Anordnung zur Übertragung von Synchronisiersignalen in STM-N-Signalen, die in einem Netzwerk der Synchron-Digital-Hierarchie von einem ersten Netzknoten mit einem Frequenznormal zu allen anderen Netzknoten übertragen werden mit einer Abschnittsanpassung (SA), mit einer SPI-Schnittstelle (SPI) und einem MTS-Erzeuger (MTS) zur Durchführung aes Verfahrens nach Anspruch 1,
**dadurch gekennzeichnet,**
daß eine VC-4-Taktrückgewinnungsanordnung (VTR) vorgesehen ist, die drei digitale Teiler (D1 bis D3) enthält, die eingangsseitig mit dem Ausgang der SPI-Schnittstelle (SPI) für den Übertragungstakt (T1) und ausgangsseitig mit je einem Eingang (x bis z) eines steuerbaren Schalters (S) verbunden sind und deren Teilungsverhältnisse 1 : 809, 1 : 810 und 1 : 811 betragen,
und die eine Schaltersteuerung (CU) enthält, die unter Berücksichtigung des Rahmentaktes (FC) bei Auftreten von positiven oder negativen Verwaltungseinheitszeiger-Justierungsereignissen (PJE) den Schalter (S) umschaltet,
die einen Speicher (B) enthält, dessen Eingang mit dem Ausgang des Schalters (S) verbunden ist, und
die einen Vervielfacher (MB) enthält, dessen Eingang mit dem Ausgang des Speichers (B) verbunden ist und der an seinem Ausgang einen Synchronübertragungstakt (T1') für den MTS-Erzeuger (MTS) liefert und einen Vervielfachungsfaktor 810 aufweist.

## Claims

1. Method for transmitting synchronization signals in STM-N signals which are transmitted in a synchronous digital hierarchy (SDH) network from a first network node (NK1) with a frequency standard (FN) to all other network nodes (NK2-NK8) and are known as synchronization signal carriers, characterized in that the recovered clock rate, coinciding with the frequency of the frequency standard (FN), of a virtual container (VC-o) contained in the respectively incoming STM-N signal is used as the synchronization signal for all other network nodes (NK2-NK8).

2. Method according to Claim 1, characterized in that on crossing a network node (NK2-NK8), the synchronization signal is relayed on instruction by a main station (Z) only to those other virtual containers (VC-o) which have their source in this network node (NK2-NK8).

3. Method according to Claim 1 or 2, characterized in that the network nodes (NK1-NK8) are informed by the main station (Z) via the respective virtual container (VC-o) used as the synchronization signal carrier (o = 1, 2, 3, 4).

4. Method according to Claim 1 or 2, characterized in that a code word which indicates the synchronization signal contained in the virtual container (VC-o) is entered on instruction by the main station (Z) into the virtual containers (VC-o) transmitted by the first network node (NK1).

5. Method according to Claim 4, characterized in that the code word is entered into the path overhead (POH).

6. Method according to Claim 5, characterized in that the J1 byte of the path overhead (POH) is used for transmitting the code word.

7. Method according to Claim 5, characterized in that a Z byte of the path overhead (POH) is used for transmitting the code word.

8. Method according to one of Claims 1 to 7, for transmission via network nodes (NK1-NK8) with crossconnect, characterized in that a virtual container (VC-n) corresponding to the switching layer is used as the synchronization signal carrier.

9. Method according to Claim 8, characterized in that the virtual containers (VC-o) are connected through by a junction function both to their destination output and to a synchronization-signal recovery circuit.

10. Arrangement for transmitting synchronization signals in STM-N signals which are transmitted in a synchronous digital hierarchy network from a first network node with a frequency standard to all other network nodes, with section adaptation (SA), with an SPI interface (SPI) and an MTS generator (MTS), for implementing the method according to Claim 1, characterized in that a VC-4 clock recovery arrangement (VTR) is provided which contains three digital dividers (D1 to D3) which are connected at input to the output of the SPI interface (SPI) for the transmission clock rate (T1) and, at output, each to an input (x to z) of a controllable switch (S), and the division ratios of which are 1:809 and 1:810 and 1:811, and which contains a switch control unit (CU) which, while taking account of the frame clock rate (FC), switches over the switch (S) when positive or negative administrative unit pointer justification events (PJE) occur, which contains a buffer (B) whose input is connected to the output of the switch (S), and which contains a multiplier (MB) whose input is connected to the output of the buffer (B) and which delivers at its output a synchronous transmission clock rate (T1') for the MTS generator (MTS) and has a multiplication factor of 810.

## Revendications

1. Procédé de transmission de signaux de synchronisation dans des signaux STM-N, que l'on transmet dans un réseau de la hiérarchie numérique synchrone (SDH) d'un premier noeud (NK1) du réseau avec un étalon (FN) de fréquence à tous les autres noeuds (NK2 à NK8) du réseau et qui sont connus comme porteurs d'un signal de synchronisation,
caractérisé en ce que
on utilise comme signal de synchronisation pour tous les autres noeuds (NK2 à NK8) du réseau la cadence, récupérée et concordant avec la fréquence de l'étalon (FN) de fréquence, d'un container virtuel (VC-o) contenu dans le signal STM-N arrivant.

2. Procédé suivant la revendication 1,
caractérisé en ce que
on ne retransmet le signal de synchronisation lors de la traversée d'un noeud (NK2 à NK8) du réseau, suivant une instruction d'un central (Z), qu'à l'autre container virtuel (VC-o), qui a sa source dans ce noeud (NK2 à NK8) du réseau.

3. Procédé suivant la revendication 1 ou 2,
caractérisé en ce que
on informe (o= 1, 2, 3, 4) les noeuds (NK1 à NK8) du réseau, par le central (Z), de l'utilisation des containers (VC-o) virtuels comme porteurs d'un signal de synchronisation.

4. Procédé suivant la revendication 1 ou 2,
caractérisé en ce que
on introduit, dans les containers (VC-o) virtuels émis par le premier noeud (NK1) du réseau, suivant une instruction du central (Z), un mot de code, qui indique que le signal de synchronisation est contenu dans le container virtuel (VC-o).

5. Procédé suivant la revendication 4,
caractérisé en ce que
l'on introduit le mot de code dans l'en-tête (POH) de trame de trajet.

6. Procédé suivant la revendication 5,
caractérisé en ce que
on utilise, pour la transmission du mot de code, l'octet J1 de l'en-tête (POH) de trame de trajet.

7. Procédé suivant la revendication 5,
caractérisé en ce que
on utilise, pour la transmission du mot de code, un octet Z de l'en-tête (POH) de trame de trajet.

8. Procédé suivant l'une des revendications 1 à 7 pour la transmission, par l'intermédiaire de noeuds (NK1 à NK8) du réseau, par des circuits de croisement (Cross-Connect),
caractérisé en ce que
on utilise, comme porteur du signal de synchronisation, un container VC-n virtuel correspondant au plan de commutation.

9. Procédé suivant la revendication 8,
caractérisé en ce que
on transmet le container virtuel (VC-o) par une fonction de bifurcation à la fois à sa sortie de destination et à un circuit de récupération de signal de synchronisation.

10. Dispositif de transmission de signaux de synchronisation dans des signaux STM-N, qui sont transmis dans un réseau de la hiérarchie numérique synchrone d'un premier noeud du réseau avec un étalon de fréquence à tous les autres noeuds du réseau, comportant une adaptation (SA) de section, une interface SPI (SPI) et un dispositif de production MTS (MTS) pour la mise en oeuvre du procédé suivant la revendication 1,
caractérisé en ce que
il est prévu un dispositif (VTR) de récupération de cadence VC-4, qui comprend trois diviseurs numériques (D1 à D3), lesquels sont reliés en entrée à la sortie de l'interface SPI (SPI) pour la cadence (T1) de transmission et en sortie à une entrée (x à z) d'un commutateur (S) commandable et dont les rapports de division sont 1 : 809, 1 : 810 et 1 : 811,
qui comprend une commande (CU) du commutateur, laquelle commute, en tenant compte de la cadence (FC) de trame lors de l'apparition d'événements (PJE) d'ajustement d'un pointeur d'unité de gestion positif ou négatif, le commutateur (S),
qui comprend une mémoire (B), dont l'entrée est reliée à la sortie du commutateur (S), et
qui comprend un multiplicateur (MB), dont l'entrée est reliée à la sortie de la mémoire (B) et qui fournit à sa sortie une cadence (T1') de transmission synchrone pour le dispositif (MTS) de production MTS et qui a un facteur de multiplication de 810.
